# EUROPEAN PATENT SPECIFICATION

(11) **EP 0 503 872 B1**
(45) Date of publication and mention of the grant of the patent: **03.01.1996**
(21) Application number: 92301984.8
(22) Date of filing: 09.03.1992
(51) Int. Cl.: C25D 15/02

(54) **Fluorine compound-containing composite material and method of preparing same**
Fluorverbindungen enthaltendes Verbundmaterial sowie Verfahren zu dessen Herstellung
Matériau composité contenant un composé du fluor et procédé de fabrication

(30) Priority: 12.03.1991 JP 72444/91; 12.03.1991 JP 72445/91
(43) Date of publication of application: 16.09.1992
(73) Proprietor: Watanabe, Nobuatsu, Kyoto/Japan (JP); YONG-BO, Chong, Kamigyo-ku, Kyoto-shi, Kyoto (JP); C. UYEMURA & CO, LTD, Osaka-shi Osaka (JP)
(72) Inventor: Watanabe, Nobuatsu, Nagaokakyo-shi, Kyoto (JP); Yong-Bo, Chong, Nr. 60, Nishijin Ground Heights, Kamigyo-ku, Kyoto-shi, Kyoto (JP); Matsumura, Sowjun, Toyonaka-shi, Osaka (JP)
(74) Representative: Paget, Hugh Charles Edward

(56) References cited:
- EP-A- 0 403 834
- GB-A- 1 035 566
- US-A- 3 293 203
- US-A- 3 361 679
- metal finishing abstracts vol.23 1981 no.1 p.15 left col. abs. B DEINEGA "investigation of cathodic deposition of ionic oligomers and metals".

## Description

The present invention relates to a fluorine compound-containing composite material having a remarkably outstanding water and oil repellency and lubricity, and a method of preparing the same.

Fluorine compound-containing composite materials are conventionally manufactured by dispersing particles or fibers of a fluorine compound into a metal or polymer matrix. For a fluorine compound-metal composite material, it is known that by using a composite plating bath prepared by dispersing particles or fibers of a fluorine compound such as fluoro resin (e.g., polytetrafluoroethylene resin) and fluorinated graphite (CF)ₙ into a metal plating solution such as nickel plating solution and codepositing a metal film with the particles or fibers from the composite plating bath, a composite plating film having particles or fibers of fluoro resin or fluorinated graphite in a metal matrix can be obtained and the resulting composite plating film has an excellent water repellency and lubricity.

A fluorine compound-polymer composite material is prepared by dispersing the fluoro resin or fluorinated graphite into a polymer such as epoxy resin. Examples of composites comprising fluorocarbon polymer particles dispersed in a polymer resin are disclosed in US-A-3 293 203, US-A-3 361 679 and GB-A-1 035 566. Such fluorine compound-polymer composite materials also have an excellent water repellency and lubricity.

However, the contact angle of the composite material having the conventional polytetrafluoroethylene resin particles dispersed therein is about 105° and the contact angle of the composite material having fluorinated graphite particles dispersed therein is 120°. There is a demand for composite materials having a higher contact angle and hence a more excellent water and oil repellency and lubricity.

Therefore, an object of the present invention is to provide a fluorine compound-containing composite material having a remarkably outstanding water and oil repellency and lubricity.

Another object of the present invention is to provide a method of preparing such a fluorine compound-containing composite material.

The present inventors have found that by using a composite plating bath prepared by dispersing polytetrafluoroethylene oligomer particles or fibres having a molecular weight of 10,000 or less in a metal plating solution, a composite film consisting essentially of a metal matrix and particles or fibres of polytetrafluoroethylene oligomer having a molecular weight of 10,000 or less dispersed therein can be obtained, and wherein the proportion of the number of fluorine atoms to the total number of atoms at the surface of the composite film is 40% or more. Surprisingly, the thus obtained composite film has a contact angle of 150° or more and hence a remarkably outstanding water and oil repellency and lubricity. We have further found that by contacting fluorine gas to the surface of the composite film obtained, the contact angle thereof is further increased.

As described above, the conventional composite material having polytetrafluoroethylene resin particles dispersed therein has a contact angle of about 105°. The dispersed amount of polytetrafluoroethylene resin particles in the composite material is usually in a range of 20 to 40% by volume. If the dispersed amount of polytetrafluoroethylene resin particles is increased, the contact angle may be increased to some extent. However, even if the dispersed amount can be increased nearly to 100% by volume, the contact angle is no longer increased and the water repellency is not improved any more. This is recognized from the fact that polytetrafluoroethylene resin film formed on the entire surface of an article as so-called "Teflon" coating merely has a contact angle of about 110°.

As the result of investigating various fluorine compound-containing composite materials, the inventors have found that the proportion of the number of fluorine atoms to the number of the total atoms at the surface portion of the composite material has an important relation to the contact angle or repellency at the surface. More specifically, the conventional polytetrafluoroethylene resin has a molecular weight of 100,000 or more and substantially consists of CF₂ groups although the end groups are composed of CF₃ groups. Therefore, even if the dispersed amount of such polytetrafluoroethylene resin in a composite material is increased, the proportion of the number of fluorine atoms at the surface portion of the composite material is not so increased and therefore the contact angle or repellency is not so highly improved. The proportion of the number of fluorine atoms at the surface portion is about 15% by volume at most even if the surface portion is formed only by the polytetrafluoroethylene resin having a molecular weight of 100,000 or more.

On the other hand, when a composite material is prepared by using polytetrafluoroethylene oligomer particles having a molecular weight of 10,000 or less or fluorinated ones prepared by treating the polytetrafluoroethylene oligomer particles with fluorine gas, the proportion of the number of fluorine atoms at the surface portion of the composite material is extremely increased and the contact angle or repellency thereof is surprisingly increased. We have further investigated and reached to a new finding that it is important to increase the proportion of the number of fluorine atoms at the surface portion in order to attain an increased contact angle resulting in a higher repellency and that when the proportion of the number of fluorine atoms at the surface portion of the composite material is increased to 40% or more, water repellency is remarkable and, to our surprise, a contact angle of nearly 180° can be attained in fact.

Therefore, according to one aspect of the present invention, there is provided a fluorine compound-containing-composite material having a contact angle of 150° or more at the surface and consisting essentially of a metal matrix and particles or fibers of a polytetrafluoroethylene oligomer having a number average molecular weight of 10,000 or less dispersed therein, the proportion of the number of fluorine atoms to the total number of atoms at the surface of the composite material being 40% or more.

According to another aspect of the present invention, there is provided a method of preparing a fluorine compound-containing composite material, which method comprises codepositing a metal film consisting essentially of a metal matrix and polytetrafluoroethylene oligomer particles or fibers having a molecular weight of 10,000 or less on to an article to be plated using a composite plating bath containing a metal plating solution having said particles or fibers dispersed therein so that a composite plating film consisting essentially of a metal matrix with the oligomer particles or fibers dispersed therein is formed on the article and the proportion of the number of fluorine atoms to the total number of the atoms at the surface portion of the composite plating film is 40% or more.

### BRIEF DESCRIPTION OF THE DRAWINGS

Fig. 1 is a graph showing a relationship between the proportion of the number of fluorine atoms at the surface portion of a composite material and a contact angle;
Fig. 2 is a microscopic photograph showing the contact state of a water droplet on a nickel - polytetrafluoroethylene oligomer composite material according to the present invention;
Fig. 3 is a microscopic photograph showing the contact state of a water droplet on the conventional polytetrafluoroethylene resin film; and
Fig. 4 is a microscopic photograph showing the contact state of a water droplet on the conventional nickel plating film.

The fluorine compound - containing composite material according to the present invention comprises a matrix composed of metal and particles or fibers of a polytetrafluoroethylene oligomer dispersed therein. At the surface portion (about 20 to about 40 Å thick) of the composite material, the proportion of the number of fluorine atoms to the number of the total atoms is in a range of 40% or more, preferably 40 to 60%. The composite material has a contact angle of 150° or more, preferably 160° or more, more preferably 170° to 180°. If the proportion of the number of fluorine atoms is less than 40% at the surface portion, such a high contact angle cannot be achieved.

The matrix material is not restricted and various materials can be used as a matrix. For example, metals including nickel, nickel alloys, copper, copper alloys, zinc, zinc alloys, tin, tin alloys and precious metals such as silver and silver alloys can be used.

A fluorine compound in which the proportion of CF₃ group is high is dispersed in the matrix. The fluorine compound is a polytetrafluoroethylene oligomer having a molecular weight of 10,000 or less because of a high proportion of CF₃ group. The lower limit of the molecular weight of the oligomer is not restricted because the proportion of CF₃ groups increases as the molecular weight becomes lower, although the lower limit may be 1,000 in general. The polytetrafluoroethylene oligomer has a lot of end groups composed of CF₃ groups as compared with the conventional polytetrafluoroethylene resin having a molecular weight of 100,000 or more and, therefore, contains more CF₃ groups. Accordingly, the polytetrafluoroethylene oligomer having so many CF groups can give a composite material having a higher proportion of the number of fluorine atoms. The polytetrafluoroethylene oligomer should preferably have an average particle size of 0.1 to 150 µm, preferably 0.1 to 15 µm, more preferably 0.1 to 4 µm. The use of fine particles is preferred in order to increase the proportion of the number of fluorine atoms at the surface portion.

The conventional high-molecular-weight polytetrafluoroethylene resin having a molecular weight of 100,000 or more substantially consists of CF₂ groups. The conventional fluorinated carbon-(CF)ₙ-substantially consists of CF groups. The proportion of CF₃ in the conventional polytetrafluoroethylene resin and fluorinated graphite is extremely low. Thus they cannot give composite materials having the proportion of the number of fluorine atoms of 40% or more at the surface portion, as described above. However, the conventional polytetrafluoroethylene resin and fluorinated graphite modified by treating them with fluorine gas to introduce CF₃ groups thereto and increase the content of CF₃ groups can also preferably be used as a fluorine compound to be dispersed in a matrix. Of course, the modified polytetrafluoroethylene oligomer treated with fluorine gas is also preferably used.

The dispersed amount of the fluorine compound to a matrix is not limited so long as the fluorine compound is present so that the composite material contains the proportion of the number of fluorine atoms of 40% or more at its surface portion.

The composite material having a metal matrix and particles or fibers of the oligomer dispersed therein according to the present invention can be obtained by an electrodeposition or electroless deposition method in which a composite plating bath prepared by dispersing particles or fibers of a polytetrafluoroethylene oligomer having a molecular weight of 10,000 or less into a metal plating solution is used.

The metal plating solution in which the particles or fibers of the water-insoluble oligomer are dispersed may the ordinary one used for the conventional composite plating. Examples of the plating solutions include nickel plating solutions such as Watt's bath and nickel sulfamate bath, nickel alloy plating solutions, copper plating solutions such as copper sulfate bath, copper alloy plating solutions, tin plating solutions, tin alloy plating solutions, zinc plating solutions, zinc alloy plating solutions and precious metal plating solutions such as silver plating solutions and silver alloy plating solution. The metal plating solution is either an electroplating solution or an electroless plating solution and comprises the conventional components according to the prior art formulation.

The particles or fibers of the polytetrafluoroethylene oligomer having a molecular weight of 10,000 or less are dispersed in the metal plating solution in an amount of about 1 to about 300 grams, preferably about 10 to about 100 grams, more preferably about 50 to about 80 grams per 1 liter of the metal plating solution.

The composite plating bath prepared by dispersing the particles or fibers of the polytetrafluoroethylene oligomer into the metal plating solution may contain a surface active agent in order to disperse the particles or fibers more uniformly in the bath and increase the codeposition rate of the particles or fibers in the metal plating film. As the surface active agents, perfluoroalkyl type surface active agents can preferably be used singly or in combination of two or more, cationic perfluoroalkyl ammonium salts being most preferred. The amount of the surface active agent is about 0.001 to about 10 grams, preferably about 0.1 to about 3 grams, more preferably about 0.5 to about 0.8 grams per 1 liter of the bath.

The plating conditions may be substantially the same plating conditions as in the conventional metal plating. In this case, the bath should be sufficiently agitated in order to uniformly disperse the particles or fibers in non-agglomerated state or separately into individual pieces thereby obtaining a metal plating film in which the particles or fibers are codeposited with a larger amount and in a uniformly and individually dispersed state. From this point of view, agitation by ultrasonic wave is recommended.

The codeposited or dispersed amount of the particles or fibers in the plating film should preferably be in a range of about 2 to about 50% by volume, more preferably about 10 to about 30% by volume.

The composite plating film is formed on an article to be plated. The article is not restricted so long as it can be plated. In other words, the article should have a electrically conductive surface. For example, the article is made of either metal or non-conductive material such as plastics and ceramics having a metal or other conductive layer formed thereon.

A fluorine compound-containing composite material can also be prepared by subjecting the composite plating film consisting essentially of a metal matrix and particles or fibers of oligomer codeposited and dispersed therein to a fluorinating treatment.

The fluorinating treatment is carried out by providing and contacting fluorine gas to the surface of the composite plating film. When the fluorinating treatment is effected on the composite plating film having the above-said polytetrafluoroethylene oligomer dispersed therein, the proportion of the number of fluorine atoms in the composite plating film more increases at the surface portion, resulting in further improved surface characteristics including water repellency.

If the composite plating film is heat treated, the fluorinating treatment should preferably be carried out after heat treatment. More specifically, when the composite plating film is heat treated in air or in an inert gas atmosphere such as nitrogen, argon and helium, particularly in air, the proportion of the number of fluorine atoms in the composite plating film may be decreased at the surface portion because a part of fluorine atoms present at the surface portion are replaced by oxygen atoms, causing the decrease of the contact angle. The fluorinating treatment can replace the oxygen atoms introduced upon heat treatment by fluorine atoms and further increase fluorine atoms at the surface portion of the composite plating film thereby increasing the proportion of the number of fluorine atoms.

The fluorine compound-containing composite material according to the present invention has a remarkably outstanding water and oil repellency and lubricity, and therefore can be available for various uses requiring these properties.

Examples and Comparative Examples are shown below for illustration but not for limitation.

### [Example]

Using a composite electroplating bath having the following formulation, a test piece having 30 mm long, 30 mm wide and 0.1 mm thick was electroplated under the following plating conditions.

### Composition of plating bath and plating condition

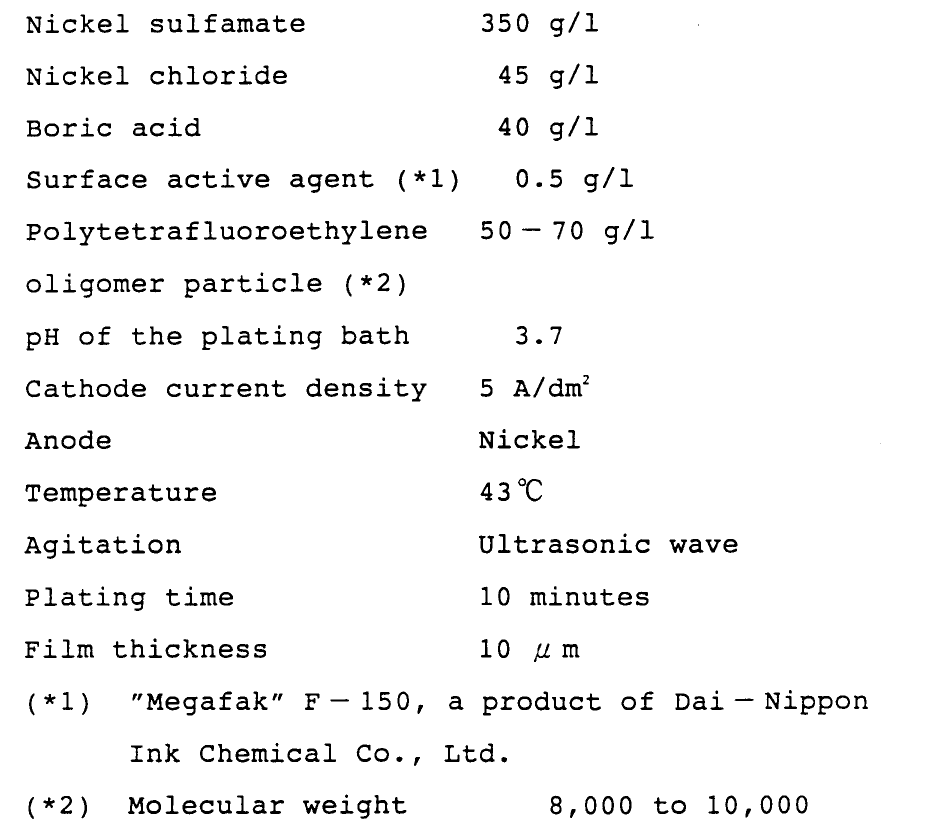

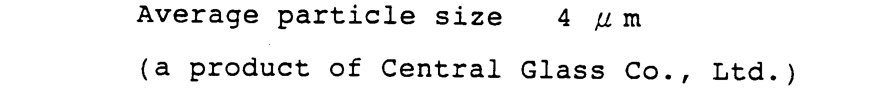

To the resulting fluorine compound-containing composite materials (composite plating films), the proportion of the number of fluorine atoms at the surface portion and the contact angle were measured by the following methods.

The results are shown in Table 1. The codeposited amount of the polytetrafluoroethylene oligomer was also shown in Table 1. Method of measuring the proportion of the number of fluorine atoms at the surface portion of the composite material

The measurement of the proportion of the number of fluorine atoms to the number of the total atoms at the surface portion was conducted by photoelectron spectrophotometry using an X-ray photoelectron spectrophotometer ESCA-750 manufactured by Shimazu Seisakusho, Ltd. and irradiating Mg-K_{α} (125306eV) as an X-ray source. The correction of bond energy was made based on gold 4f3/2 spectrum (83.6eV) as the reference standard. For the quantitative analysis, the spectra of the respective atoms were measured.

In the case of composite materials comprising a polymer matrix described later in which hydrogen atoms are contained, the hydrogen atoms cannot be measured by ESCA 750. So the H/O in the monomer was calculated and then the number of hydrogen atoms was calculated from the spectral intensity of oxygen atoms.

### Method of measuring contact angle

Contact angle was measured at room temperature (25°C) using a contact angle measurement apparatus G-I manufactured by Etsuma Co., Ltd. The measurement was carried out by dropping a droplet of distilled water the diameter of which was adjusted to 1 mm through a microhead from a microsyringe to the surface of a composite material sample and then quickly reading the equilibrated contact angle. The contact angle value shows the mean value of 10 samples.

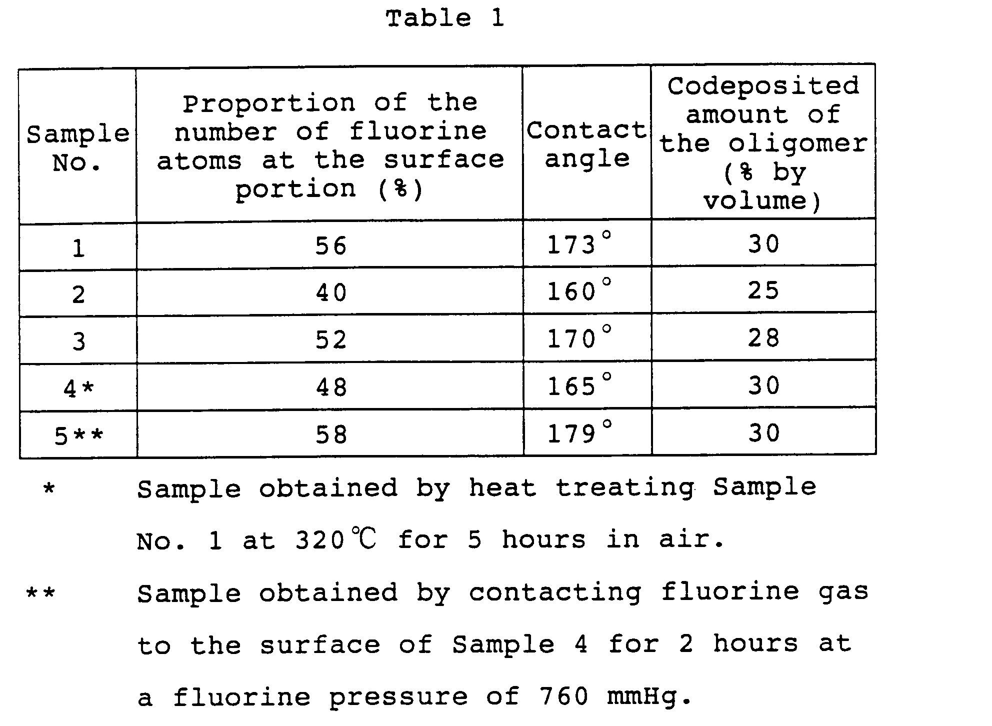

### [Comparative Example]

The composite plating process of the above Example was repeated, except that polytetrafluoroethylene resin particles having a molecular weight of more than 100,000 were used instead of the above polytetrafluoroethylene oligomer particles. In the resulting composite plating film, the proportion of the number of fluorine atoms at the surface portion of the film was 16%, the codeposited amount of the polytetrafluoroethylene resin particles in the film was 30% by volume and the contact angle was 105° .

Further, for comparison purposes, the proportions of the number of fluorine atoms at the surface portion as well as contact angle were evaluated for a nickel-fluorinated graphite composite material obtained by the same procedure as in the Example except that fluorinated graphite particles were used instead of the oligomer particles, a composite material consisting of polymethylmethacrylate resin matrix and fluorinated graphite particles dispersed therein, and composite materials consisting of epoxy resin matrix and fluorinated graphite particles or polytetrafluoroethylene resin particles having a molecular weight of more than 100,000 dispersed therein.

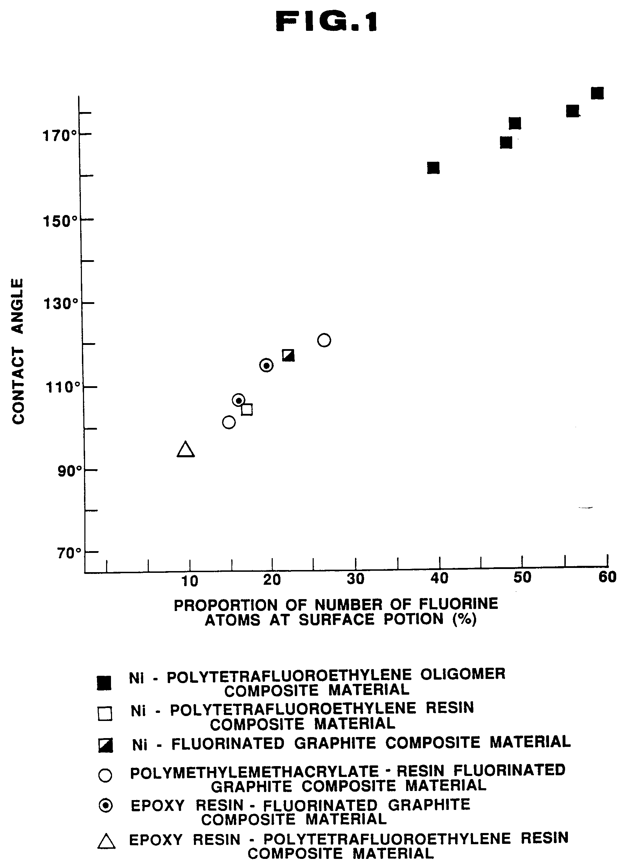

The results are shown in Fig. 1.

As is evident from the results of Fig. 1 which shows the relation between the proportion of the number of fluorine atoms at the surface portion and the contact angle, the composite materials have higher contact angles if the proportion of the number of fluorine atoms at the surface portion is 40% or more.

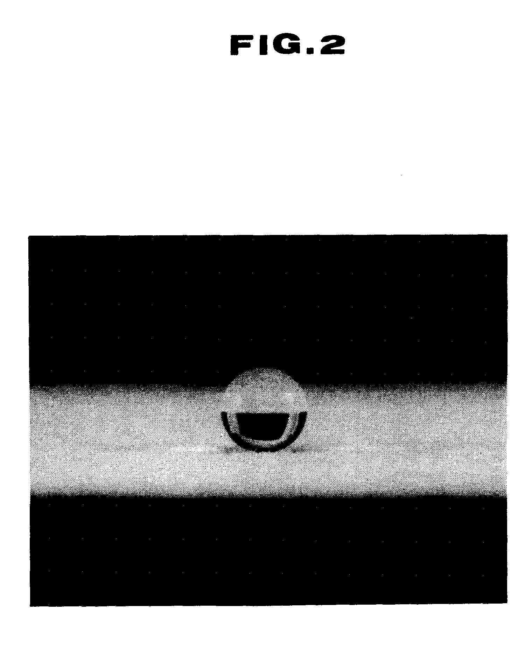

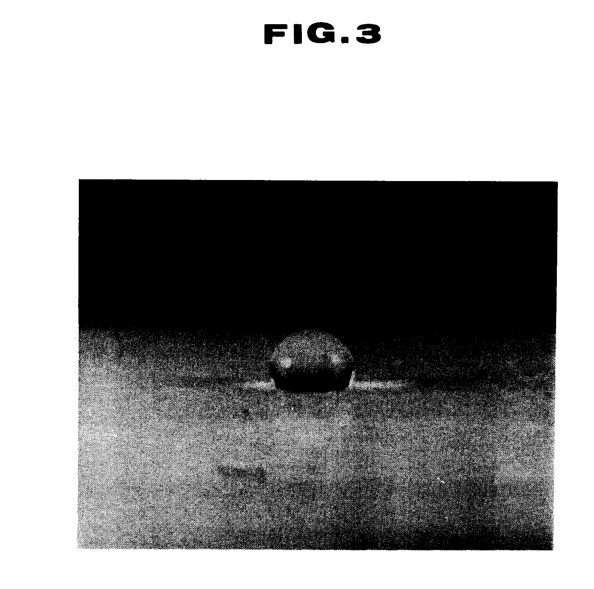

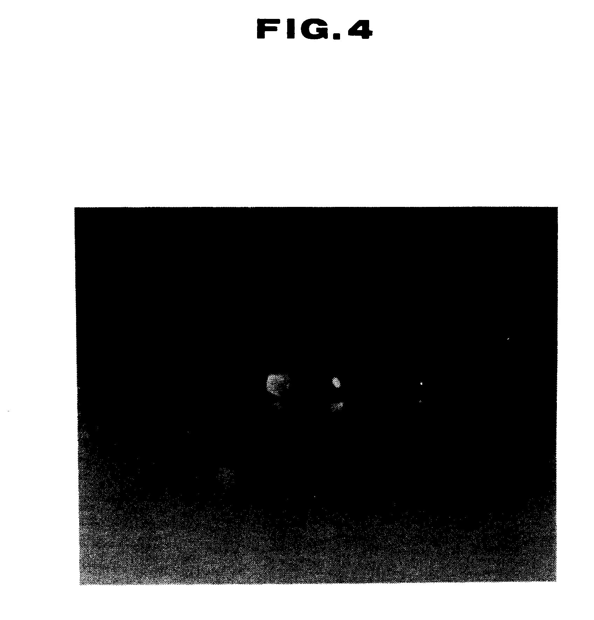

Figs. 2 to 4 are microscopic photographs (magnification: 20 times). Fig. 2 shows the contact state of a water droplet on the surface of a nickel-polytetrafluoroethylene oligomer composite material having a contact angle of 173° according to the present invention. Fig. 3 shows the contact state of a water droplet on the surface of the conventional polytetrafluoroethylene resin film having a molecular weight of more than 100,000 and a contact angle of 110°. Fig. 4 shows the contact state of a water droplet on the surface of the conventional nickel plating film having no fluorine compound dispersed therein and a contact angle of 67°.

## Claims

1. A fluorine compound-containing composite material having a contact angle of 150° or more at the surface and consisting essentially of a metal matrix and particles or fibers of a polytetrafluoroethylene oligomer having a number average molecular weight of 10,000 or less dispersed therein, the proportion of the number of fluorine atoms to the total number of atoms at the surface of the composite material being 40% or more.

2. A composite material according to Claim 1 wherein the proportion of the number of fluorine atoms to the total number of atoms at the surface of the material is from 40 to 60%.

3. A composite material according to Claim 1 or 2 having a contact angle of 160° or more.

4. A composite material according to any one of claims 1 to 3 wherein the polytetrafluoroethylene oligomer has a number average molecular weight in the range of 1,000 to 10,000.

5. A method of preparing a fluorine compound-containing composite material, as claimed in any one of claims 1 to 4, which method comprises codepositing onto an article to be plated a metal film consisting essentially of a metal matrix and polytetrafluoroethylene oligomer particles or fibers having a molecular weight of 10,000 or less using a composite plating bath containing a metal plating solution having said particles or fibers dispersed therein.

6. A method according to Claim 5 wherein the surface of the metal film is contacted with fluorine gas to increase the proportion of the number of fluorine atoms to the total number of atoms at the surface of the composite material.

7. A method according to Claim 6 wherein the metal film is heat treated prior to being contacted with fluorine gas.

8. A method according to any one of claims 5 to 7 wherein the metal film contains polytetrafluoroethylene oligomer dispersed therein in an amount of from 2% to 50% by volume.

## Patentansprüche

1. Eine Fluorverbindung enthaltendes Verbundmaterial mit einem Oberflächen-Kontaktwinkel von 150° oder mehr, das im wesentlichen aus einer Metallmatrix und darin dispergierten Teilchen oder Fasern aus einem Polytetrafluorethylenoligomer mit einem durchschnittlichen Polymerisationsgrad bzw. Molekulargewicht (number average molecular weight) von 10.000 oder weniger besteht, wobei der Anteil der Anzahl an Fluoratomen an der Gesamtzahl an Atomen an der Oberfläche des Verbundmaterials 40% oder mehr beträgt.

2. Verbundmaterial nach Anspruch 1, worin der Anteil der Anzahl an Fluoratomen an der Gesamtzahl an Atomen an der Oberfläche des Materials 40 bis 60% beträgt.

3. Verbundmaterial nach Anspruch 1 oder 2 mit einem Kontaktwinkel von 160° oder mehr.

4. Verbundmaterial nach einem der Ansprüche 1 bis 3, worin das Polytetrafluorethylenoligomer ein(en) durchschnittlichen(s) Polymerisationsgrad bzw. Molekulargewicht (number average molecular weight) im Bereich von 1.000 bis 10.000 aufweist.

5. Verfahren zur Herstellung eines eine Fluorverbindung enthaltenden Verbundmaterials nach einem der Ansprüche 1 bis 4, welches Verfahren das gleichzeitige Ablagern eines Metallfilms, der im wesentlichen aus einer Metallmatrix besteht, und von Polytetrafluorethylenoligomerteilchen oder -fasern mit einem Molekulargewicht von 10.000 oder weniger, unter Verwendung eines Verbundplattierungsbades, das eine Metallplattierungslösung enthält, in der die Teilchen oder Fasern dispergiert sind, auf einem zu plattierenden Gegenstand umfaßt.

6. Verfahren nach Anspruch 5, worin die Oberfläche des Metallfilms mit Fluorgas in Kontakt gebracht wird, um den Anteil der Anzahl an Fluoratomen an der Gesamtanzahl an Atomen an der Oberfläche des Verbundmaterials zu erhöhen.

7. Verfahren nach Anspruch 6, worin der Metallfilm wärmebehandelt wird, bevor er mit Fluorgas in Kontakt gebracht wird.

8. Verfahren nach einem der Ansprüche 5 bis 7, worin der Metallfilm darin dispergiertes Polytetrafluorethylenoligomer in einer Menge von 2 bis 50 Vol.-% enthält.

## Revendications

1. Matériau composite contenant un composé de fluor, ayant un angle de contact de 150° ou plus en surface et comprenant essentiellement une matrice métallique et des particules ou des fibres d'un oligomère de polytétrafluoroéthylène ayant un poids moléculaire moyen de 10 000 ou moins et y dispersé, la proportion du nombre d'atomes de fluor par rapport au nombre total d'atomes à la surface du matériau composite étant de 40% ou plus.

2. Matériau composite selon la revendication 1, caractérisé en ce que la proportion du nombre d'atomes de fluor par rapport au nombre total d'atomes à la surface du matériau est comprise entre 40 et 60%.

3. Matériau composite selon la revendication 1 ou 2 ayant un angle de contact de 160° ou plus.

4. Matériau composite selon l'une quelconque des revendications 1 à 3, caractérisé en ce que l'oligomère de polytétrafluoroéthylène possède un poids moléculaire moyen compris dans l'intervalle 1 000 à 10 000.

5. Procédé de préparation d'un matériau composite contenant un composé de fluor, comme revendiqué dans l'une quelconque des revendications 1 à 4, qui consiste à co-déposer sur un article à garnir un film métallique comprenant essentiellement une matrice métallique et des fibres ou particules d'oligomère de polytétrafluoroéthylène ayant un poids moléculaire de 10 000 ou moins en utilisant un bain de placage de composite contenant une solution de placage de métal dans laquelle sont dispersées lesdites particules ou fibres.

6. Procédé selon la revendication 5, dans laquelle la surface du film métallique est mise en contact avec du gaz de fluor pour augmenter la proportion du nombre d'atomes de fluor par rapport au nombre total d'atomes à la surface du matériau composite.

7. Procédé selon la revendication 6, dans lequel le film métallique est traité à la chaleur avant d'être mis en contact avec le gaz de fluor.

8. Procédé selon l'une quelconque des revendications 5 à7, dans lequel le film métallique contient un oligomère de polytétrafluoroéthylène dispersé suivant une quantité de 2% à 50% en volume.
